# EUROPEAN PATENT APPLICATION

(11) **EP 4 722 853 A1**
(43) Date of publication of application: **08.04.2026**
(21) Application number: 24882815.4
(22) Date of filing: 23.10.2024
(51) Int. Cl.: G06F 1/16, G09F 9/30

(54) **GUIDE STRUCTURE AND ELECTRONIC DEVICE INCLUDING SAME**

(30) Priority: 24.10.2023 KR 20230142560; 21.12.2023 KR 20230188878
(71) Applicant: Samsung Electronics Co., Ltd., Suwon-si, Gyeonggi-do 16677 (KR)
(72) Inventor: NAM, Anjin, Suwon-si, Gyeonggi-do 16677 (KR); LEE, Ohhee, Suwon-si, Gyeonggi-do 16677 (KR); KIM, Sanghyeon, Suwon-si, Gyeonggi-do 16677 (KR)
(74) Representative: Appleyard Lees IP LLP
(86) International application number: PCT/KR2024/016187
(87) International publication number: WO 2025/089788

(57) **Abstract**

An electronic device according to an embodiment disclosed herein may comprise: a first housing; a second housing configured to slide relative to the first housing; a flexible display including a first display region and a second display region extending from the first display region and configured such that the second display region can change on the basis of the sliding of the second housing; a plurality of bars arranged below the second display region; a drive structure configured to provide a driving force for the sliding of the second housing relative to the first housing on a side surface of the electronic device; and a linear motion (LM) guide structure disposed on the lower end of the plurality of bars and for supporting the sliding of the second housing relative to the first housing on the side surface of the electronic device.

## Description

### [Technical Field]

An embodiment of the disclosure relates to a guide structure and an electronic device including the same.

### [Background Art]

Due to remarkable advances in information and semiconductor technologies, the adoption and use of various electronic devices are rapidly increasing. In particular, recent electronic devices are being developed to be portable and capable of communication.

"Electronic device" may refer to a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voice or images. As electronic devices are highly integrated, and ultra-high-speed, high-capacity wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device includes a first housing, a second housing configured to slide relative to the first housing, a flexible display comprising a first display area and a second display area extending from the first display area and configured such that the second display area varies based on a sliding movement of the second housing, a plurality of bars disposed below the second display area, a drive structure configured to provide a driving force for the sliding movement of the second housing relative to the first housing on a side of the electronic device, and a linear motion (LM) guide structure disposed below the plurality of bars and configured to support the sliding movement of the second housing relative to the first housing on the side of the electronic device. The linear motion (LM) guide structure may include a block configured to move in a first direction, the block comprising a first block disposed adjacent to a planar portion of the second display area and a second block disposed adjacent to a curved portion extending from the planar portion and configured to couple with the first block. The first block may include a guide portion guiding movement of the second block. The second block may be configured to be slidably movable in the first direction along the guide portion.

According to an embodiment of the disclosure, an electronic device includes a first housing, a second housing configured to slide relative to the first housing, a flexible display comprising a first display area and a second display area extending from the first display area and configured such that the second display area varies based on a sliding movement of the second housing, a plurality of bars disposed below the second display area, a drive structure configured to provide a driving force for the sliding movement of the second housing relative to the first housing on a side of the electronic device, and a linear motion (LM) guide structure disposed below the plurality of bars and configured to support the sliding movement of the second housing relative to the first housing on the side of the electronic device. The linear motion (LM) guide structure may include a block configured to move in a first direction, the block comprising a first block disposed adjacent to a planar portion of the second display area, a second block disposed adjacent to a curved portion extending from the planar portion and configured to couple with the first block, and an elastic member disposed between the first block and the second block. The first block may include a guide portion guiding movement of the second block. The second block may be configured to be slidably movable in the first direction along the guide portion.

### [Brief Description of Drawings]

The above-described aspects or other aspects, configurations and/or advantages of an embodiment of the disclosure may become clearer through the following detailed description with reference to the accompanying drawings.
FIG. 1 is a block diagram illustrating an electronic device in a network environment according to an embodiment of the disclosure.
FIG. 2 is a view illustrating a state in which a second display area of a display is received in a housing according to an embodiment of the disclosure.
FIG. 3 is a view illustrating a state in which a second display area of a display is exposed to the outside of a housing according to an embodiment of the disclosure.
FIG. 4 is an exploded perspective view illustrating an electronic device according to an embodiment of the disclosure.
FIG. 5 is a view illustrating internal components of an electronic device according to an embodiment of the disclosure.
FIG. 6 is a view illustrating a display and a configuration supporting the display according to an embodiment of the disclosure.
FIG. 7 is a view illustrating a rear surface of a linear motion (LM) guide structure according to an embodiment of the disclosure.
FIG. 8 is a view illustrating a front surface of a linear motion (LM) guide structure according to an embodiment of the disclosure.
FIG. 9 is a perspective view illustrating a block of a linear motion guide structure according to an embodiment of the disclosure.
FIG. 10 is a front view illustrating a block of a linear motion guide structure according to an embodiment of the disclosure.
FIG. 11 is a front view illustrating a first block of a linear motion guide structure according to an embodiment of the disclosure.
FIG. 12 is a front view illustrating a second block of a linear motion guide structure according to an embodiment of the disclosure.
FIG. 13 is a view illustrating a first state of a block according to an embodiment of the disclosure.
FIG. 14 is a view illustrating a second state of a block according to an embodiment of the disclosure.
FIG. 15 is a view illustrating a block of a linear motion guide structure according to an embodiment of the disclosure.
FIG. 16 is a front view illustrating a first block of a linear motion guide structure according to an embodiment of the disclosure.
FIG. 17 is a front view illustrating a second block of a linear motion guide structure according to an embodiment of the disclosure.
FIG. 18 is a front view illustrating an elastic member of a linear motion guide structure according to an embodiment of the disclosure.

Throughout the accompanying drawings, similar reference numerals may be given to similar portions, configurations and/or structures.

### [Mode for Carrying out the Invention]

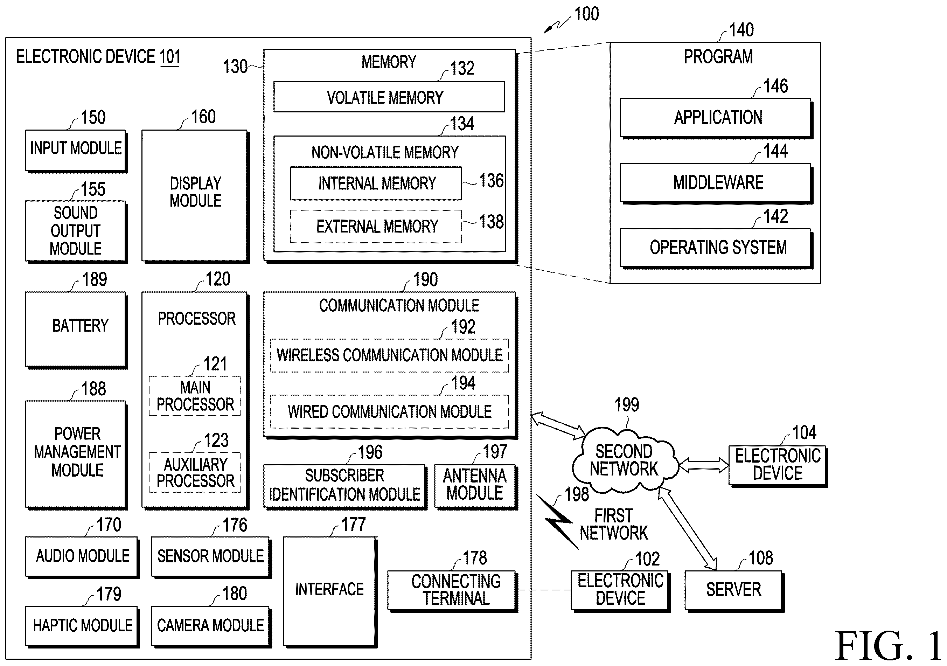

FIG. 1 is a block diagram illustrating an electronic device in a network environment according to an embodiment of the disclosure;
Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160). The processor 120 may execute, for example, software (e.g., a program 140) to control at least one other component (e.g., a hardware or software component) of the electronic device 101 coupled with the processor 120, and may perform data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or a sub processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The sub processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the sub processor 123 (e.g., an image signal processor or a communication processor) may be implemented as part of another component (e.g., the camera module 180 or the communication module 190) functionally related to the sub processor 123. According to an embodiment, the sub processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support a requirement specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

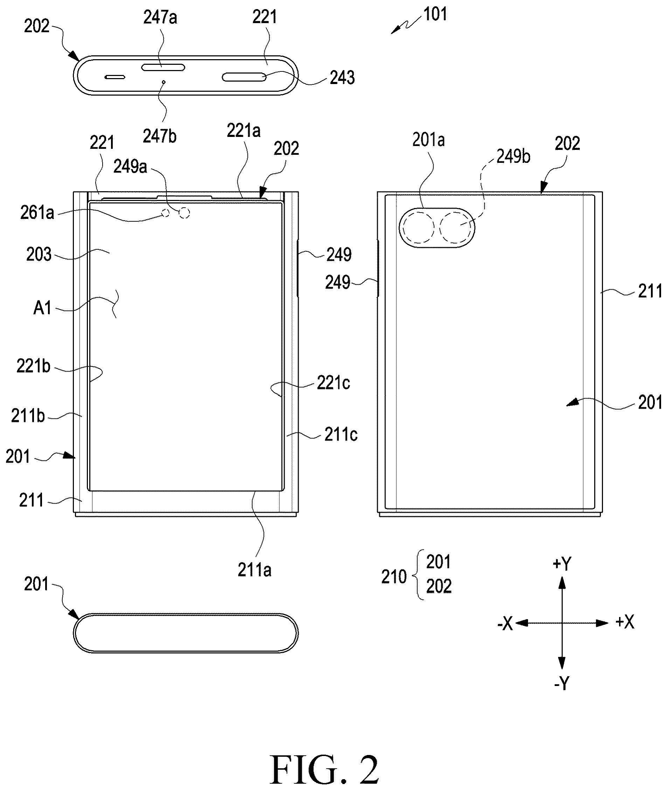

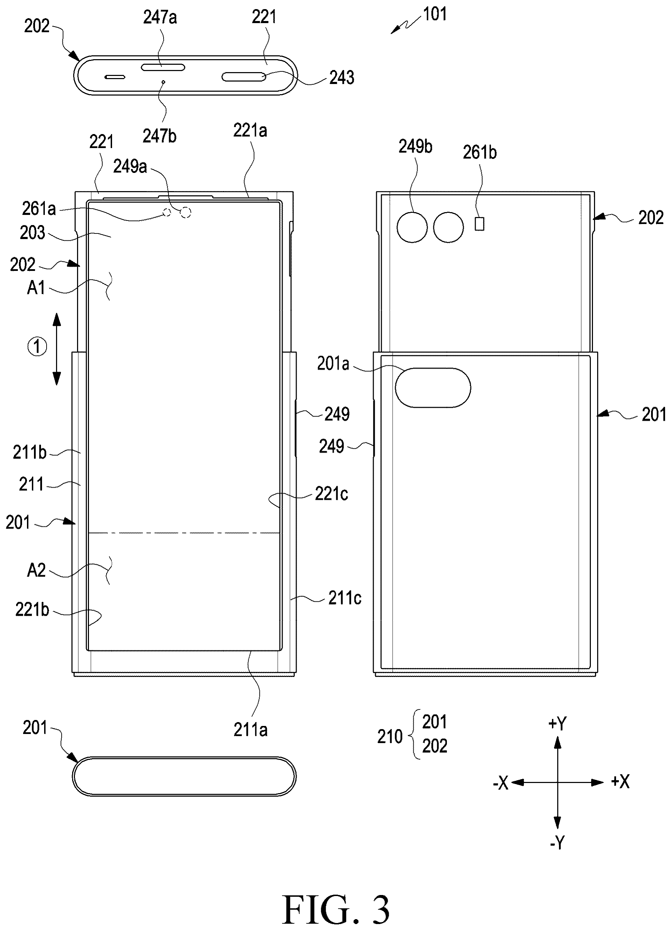

FIG. 2 is a view illustrating a state in which a second display area A2 of a display 203 is received in a housing 210 according to an embodiment of the disclosure. FIG. 3 is a view illustrating a state in which a second display area A2 of a display 203 is exposed to the outside of a housing 210 according to an embodiment of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is open. Referring to FIGS. 2 and 3, the electronic device 101 may include a housing 210. The housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in the shown direction with respect to the first housing 201, for example, a direction indicated by the arrow η.

According to an embodiment, the second housing 202 may be referred to as a slide portion or a slide housing, and may be movable relative to the first housing 201. According to an embodiment, the second housing 202 may accommodate various electrical and electronic components, such as a circuit board or a battery.

According to an embodiment, the slide-in state of the electronic device 101 (or the slide-out state of the electronic device 101) may be changed into the slide-out state of the electronic device 101 (or the slide-in state of the electronic device 101) based on a defined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing 201 or a portion of the second housing 202. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or a slide-out state of the electronic device 101) may be changed to a slide-out state (or a slide-in state of the electronic device 101) in response to a voice input received through a microphone with a strength equal to or greater than a reference strength having a contact point on the screen display area (e.g., the first display area A1). For example, the slide-in state (or the slide-out state of the electronic device 101) may be changed into the slide-out state (or the slide-in state of the electronic device 101) in response to an external force applied to the first housing 201 and/or the second housing 202 to move the second housing 202 with respect to the first housing 201. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. However, the slide-in/out operations of the electronic device 101 are not limited thereto.

According to an embodiment, the first housing 201 may receive a motor, a speaker, a sim socket, and/or a sub circuit board electrically connected with a main circuit board. The second housing 202 may receive a main circuit board on which electric components, such as an application processor (AP) and a communication processor (CP) are mounted.

According to an embodiment, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

According to an embodiment, the 1-1th sidewall 211a, 1-2th sidewall 211b, and 1-3th sidewall 211c of the first cover member 211 may be formed to have a side opening (e.g., front opening) to receive (or surround) at least a portion of the second housing 202. For example, at least a portion of the second housing 202 may be surrounded by the first housing 201 and be slid in the direction parallel to the one surface, e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing 202 may include a second cover member 221 (e.g., a slide plate). The second cover member 221 may have a plate shape and include a surface supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing 202 moves in a first direction (e.g., direction ①) parallel to the 2-2th sidewall 221b or the 2-3th sidewall 221c, the slide-in state and slide-out state of the electronic device 101 may be formed. In the slide-in state of the electronic device 101, the second housing 202 may be positioned at a first distance from the 1-1th sidewall 211a of the first housing 201. In the slide-out state of the electronic device 101, the second housing 202 may move to be positioned at a second distance larger than the first distance from the 1-1th sidewall 211a of the first housing 201. In an embodiment, in the slide-in state of the electronic device 101, the first housing 201 may be formed to surround a portion of the 2-1th sidewall 221a.

According to an embodiment, the electronic device 101 may have an intermediate state between the slide-in state (e.g., fully closed state) of FIG. 2 and the slide-out state (e.g., fully open state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) to the height (length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 249, a connector hole 243, audio modules 247a and 247b, or camera modules 249a and 249b. According to an embodiment, the electronic device 101 may further include an indicator (e.g., a light emitting diode (LED) device) or various sensor modules.

According to various embodiments, the display 203 may include a first display area A1 and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and the second display area A2 may be received in the first housing 201 or visually exposed to the outside of the electronic device 101 as the second housing 202 slides relative to the first housing 201. According to an embodiment, as the electronic device 101 changes from the slide-out state to slide-in state, the display 203 may expand in the lower direction (e.g., -Y direction) of the electronic device 101. For example, in the slide-out state of the electronic device 101, the second display area A2 may be visually exposed under the display 203 (e.g., in the -Y direction). According to an embodiment, as the electronic device 101 changes from the slide-out state to slide-in state, the display 203 may extend in the upper direction (e.g., +Y direction) of the electronic device 101. For example, in the slide-out state of the electronic device 101, the second display area A2 may be visually exposed above the display 203 (e.g., in the +Y direction).

According to an embodiment, the second display area A2 may be received in the space positioned inside the first housing 201 or exposed to the outside of the electronic device 101 while being substantially guided by one area of the first housing 201. According to an embodiment, the second display area A2 may move based on a slide of the second housing 202 in the first direction (e.g., the direction indicated by the arrow η). For example, while the second housing 202 slides, a portion of the second display area A2 may be deformed into a curved shape in a position corresponding to the curved surface (not illustrated) of the first housing 201.

According to an embodiment, as viewed from above the second cover member 221 (e.g., front cover), if the electronic device 101 changes from the slide-in state to slide-out state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion of the first housing, and a portion of the second display area A2 may remain in the curved shape in the position corresponding to the curved surface (not illustrated).

According to an embodiment, the key input device 249 may be positioned in an area of the housing 210 (e.g., the first housing 201 and/or second housing 202). Depending on the appearance and usage state, the electronic device 101 may be designed such that the illustrated key input device 249 is omitted or includes additional key input device(s). According to an embodiment, the electronic device 101 may include a key input device (not shown), e.g., a home key button or a touchpad disposed around the home key button. According to an embodiment, at least a portion of the key input device 249 may be disposed on the 1-1th sidewall 211a, the 1-2th sidewall 211b, or the 1-3th sidewall 211c of the first housing 201. According to an embodiment, at least a portion of the key input device 249 may be disposed on the 2-1th sidewall 221a, the 2-2th sidewall 221b, and/or the 2-3th sidewall 221c of the second housing 202.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to an embodiment, the audio modules 247a and 247b may include at least one speaker hole 247a or at least one microphone hole 247b. One of the speaker holes 247a may be provided as a receiver hole for voice calls, and another may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as a single hole, or may include a speaker excluding the speaker hole 247a (e.g., piezo speaker). According to an embodiment, the speaker hole 247a and the microphone hole 247b may be positioned in the first housing 201 and/or the second housing 202.

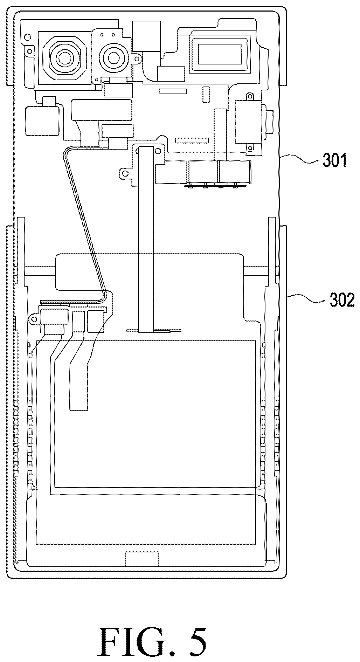

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 101 may measure the distance to the subject by including an infrared projector and/or an infrared receiver. The camera modules 249a, 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may not be visually exposed to a screen display area (e.g., the first display area A1) and may include an under display camera (UDC). According to an embodiment, the second camera module 249b may capture the subject in a direction opposite to the first display area A1. According to an embodiment, the first camera module 249a and/or the second camera module 249b may be disposed on the second housing 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. According to an embodiment, the plurality of second camera modules 249b may be arranged along the sliding direction (e.g., Y-axis direction) of the electronic device 101. According to an embodiment, the plurality of second camera modules 249b may be arranged along N * M rows and columns like a matrix.

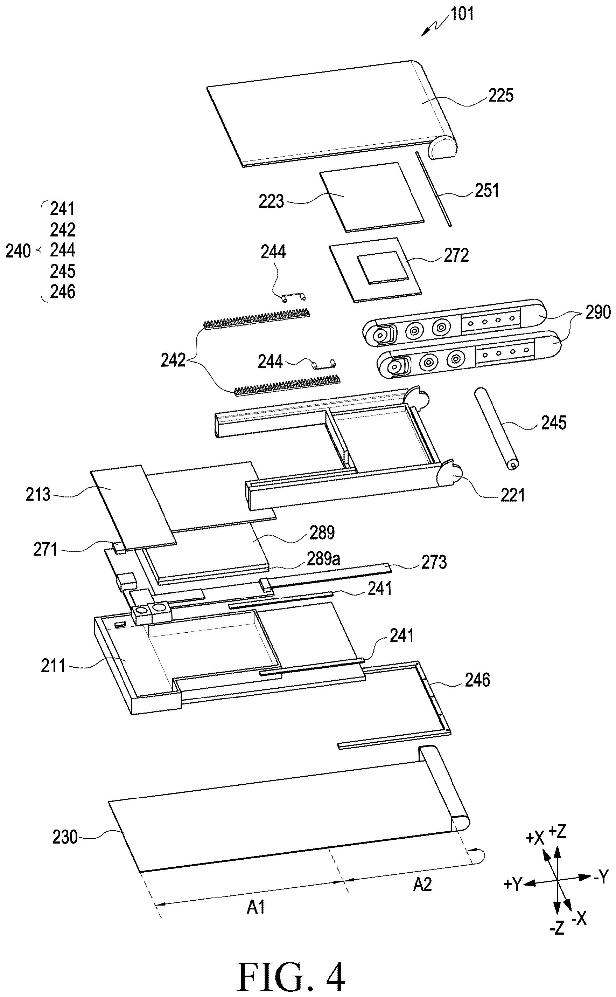

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and/or slide-out state of the electronic device 101. For example, at least a portion (e.g., the first rear plate 213 and/or the second rear plate 225 of FIG. 4) of the housing 210 may be substantially transparent. The second camera module 249b may capture the outside of the electronic device 101 through the first rear plate 213 and/or the second rear plate 225. According to an embodiment, the second camera module 249b may be visually exposed to the outside of the electronic device 101 to capture the outside of the electronic device 101 in the slide-in state and slide-out state of the electronic device 101. For example, the first housing 201 (e.g., the first rear plate 213 of FIG. 4) may include an opening 201a for the second camera module 249b.

According to an embodiment, an indicator (not shown) of the electronic device 101 may be disposed on the first housing 201 or the second housing 202, and the indicator may include a light emitting diode to provide state information about the electronic device 101 as a visual signal. The sensor module 261a or 261b of the electronic device 101 may produce an electrical signal or data value corresponding to the internal operation state or external environment state of the electronic device. The sensor module 261a or 261b may include a proximity sensor, a fingerprint sensor, and/or a biometric sensor (e.g., an iris/face recognition sensor or a heartrate monitor (HRM) sensor). According to an embodiment, the sensor module 261a or 261b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 261a or 261b may be disposed in the first housing 201 and/or the second housing 202. The sensor modules 261a and 261b may include a first sensor module 261a (e.g., proximity sensor or illuminance sensor) disposed on the front surface of the electronic device 101 and/or a second sensor module 261b (e.g., heart rate monitoring (HRM) sensor) disposed on the rear surface of the electronic device 101.

FIG. 4 is an exploded perspective view illustrating an electronic device 101 according to an embodiment.

Referring to FIG. 4, an electronic device 101 may include a first housing 201, a second housing 202, a display 230, and a drive structure 240. The configuration of the first housing 201, the second housing 202, and the display assembly 230 of FIG. 4 may be identical in whole or part to the configuration of the first housing 201, the second housing 202, and the display 203 of FIG. 2 and 3. The embodiment of FIG. 4 may be partially combined with the embodiments of FIGS. 2 to 3.

According to an embodiment, the housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to be capable of reciprocating movement by a predetermined distance in a direction illustrated based on the first housing 201, e.g., in a direction indicated by the arrow η of FIG. 3 (e.g., y-axis direction).

According to an embodiment, the second housing 202 may be referred to as a slide portion or a slide housing, and may be movable relative to the first housing 201.

According to an embodiment, the first housing 201 may include a first cover member 211 (e.g., the first cover member 211 of FIGS. 2 and 3) and a first rear plate 213.

According to an embodiment, the first cover member 211 may receive components (e.g., a battery 289, a camera module (e.g., 249a of FIG. 2)) in at least a portion thereof. According to an embodiment, the first cover member 211 may receive a battery 289. For example, the first cover member 211 may include a groove for receiving the battery 289. The first cover member 211 is connected to a battery cover 289a and may surround at least a portion of the battery 289 together with the battery cover 289a. According to an embodiment, the first cover member 211 may protect components located in the first housing 201 (e.g., the battery 289, a camera module (e.g., 249a of FIG. 2), and the first circuit board 271) from external impact. According to an embodiment, a first circuit board 271 receiving electronic components (e.g., the processor 120 and/or the memory 130 of FIG. 1) may be connected to the first cover member 211.

According to an embodiment, the first rear plate 213 may substantially form at least a portion of the exterior of the first housing 201 or the electronic device 101. For example, the first rear plate 213 may be coupled to the outer surface of the first cover member 211. According to an embodiment, the first rear plate 213 may provide a decorative effect on the exterior of the electronic device 101. The first rear plate 213 may be formed of at least one of metal, glass, synthetic resin, or ceramic.

According to an embodiment, the second housing 202 may include a second cover member 221 (e.g., the second cover member 221 of FIGS. 2 and 3), a rear cover 223, and a second rear plate 225.

According to an embodiment, the second cover member 221 is connected to the first housing 201 through a drive structure 240 to be described below and may perform linear reciprocating movement in one direction (e.g., the arrow η direction of FIG. 3) while being guided by the drive structure 240.

According to an embodiment, the second cover member 221 may be formed of a metal material and/or a non-metal (e.g., polymer) material. According to an embodiment, a second circuit board 272 receiving electronic components (e.g., the processor 120 and/or the memory 130 of FIG. 1) may be connected to the second cover member 221. According to an embodiment, the second cover member 221 may protect components located in the second housing 202 (e.g., the second circuit board 272 and a rear cover 223) from external impact.

According to an embodiment, the rear cover 223 may protect components located in the second cover member 221 (e.g., the second circuit board 272). For example, the rear cover 223 may be connected to the second cover member 221 and may be formed to surround at least a portion of the second circuit board 272. According to an embodiment, the rear cover 223 may include an antenna pattern (e.g., at least one antenna element) for communication with an external electronic device 101. For example, when the rear cover 223 is formed of a dielectric material injection (e.g., antenna carrier), at least one antenna element may be disposed on an outer surface (e.g., a surface facing the +Z-axis direction). For example, at least one antenna element may include a laser direct structuring (LDS) antenna pattern formed on the outer surface of the rear cover 223. For example, at least one antenna element may be formed in an embedded manner when the rear cover 223 is injected. For example, at least one antenna element may be configured to transmit or receive wireless signals in a designated frequency band (e.g., legacy band) by being electrically connected to a wireless communication circuit (e.g., the wireless communication module 192 of FIG. 1) disposed on the second circuit board 272.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to embodiments, a display 230 may be referred to as a flexible display, a foldable display, and/or a rollable display. According to an embodiment, the first display area A1 of the display 230 may be supported by a rigid body. The second display area A2 may be supported by a bendable structure. For example, the first display area A1 may be supported by one surface of the first cover member 211 or an unillustrated plate. The second display area A2 may be supported by a roller structure 245.

According to an embodiment, as the second housing 202 slides, the roller structure 245 may rotate in a direction corresponding to the moving direction of the second housing 202. For example, referring to FIG. 4, when the second housing 202 changes from the slide-in state to the slide-out state, the roller structure 245 may rotate in a first rotation direction (e.g., clockwise). For example, referring to FIG. 4, when the second housing 202 changes from the slide-out state to the slide-in state, the roller structure 245 may rotate in a second rotation direction (e.g., counterclockwise) opposite to the first rotation direction. According to an embodiment, the roller structure 245 may be coupled with the second cover member 221.

According to an embodiment, the drive structure 240 may move the second housing 202 relative to the first housing 201. For example, the drive structure 240 may be configured to provide a driving force for the sliding movement of the second housing 202 relative to the first housing 201. The drive structure 240 may include a first rack gear 242 that slides inside the second housing 202, a second rack gear 246 that slides inside the second housing 202 in a direction opposite to the first rack gear 242, and a pinion gear 244 configured to engage with the first rack gear 242 and the second rack gear 246 between the first rack gear 242 and the second rack gear 246. According to an embodiment, the drive structure 240 may further include a first magnetic body 241 disposed to face the first rack gear 242 within the first housing 201. According to an embodiment, the drive structure 240 may further include a roller structure 245 for sliding movement of the display 230.

According to an embodiment, a sweeper member 251 may be a component for preventing or reducing foreign objects entry in an extraction area of the display 230. For example, the sweeper member 251 may be composed of fabric or brush. According to an embodiment, the sweeper member 251 may include a waterproof function.

According to an embodiment, the memory may include, e.g., volatile memory or non-volatile memory.

According to an embodiment, the interface may include, e.g., a high definition multimedia interface (HDMI), a universal serial bus (USB) interface, a secure digital (SD) card interface, and/or an audio interface. An interface may, e.g., electrically or physically connect the electronic device 101 to an external electronic device 101 and may include a USB connector, an SD card/MMC connector, or an audio connector.

According to an embodiment, the second housing 202 may receive a second circuit board 272 (e.g., main board). According to an embodiment, a processor, memory, and/or an interface may be mounted on the second circuit board 272. The processor may include one or more of, e.g., a central processing unit, an application processor, a graphic processing device, an image signal processor, a sensor hub processor, or a communication processor. According to various embodiments, the second circuit board 272 may include a flexible printed circuit board type radio frequency cable (FRC). The second circuit board 272 may be disposed on at least a portion of the second cover member 221 and may be electrically connected to an antenna module and a communication module.

According to an embodiment, the electronic device 101 may include a first circuit board 271 (e.g., sub circuit board) spaced apart from the second circuit board 272 (e.g., main circuit board) within the first housing 201. The first circuit board 271 may be electrically connected to the second circuit board 272 through a flexible printed circuit board 273. The first circuit board 271 may be electrically connected with electric components disposed in an end area of the electronic device 101, such as the battery 289 or a speaker and/or a sim socket, and may transfer signals and power. According to an embodiment, the first circuit board 271 may receive or be connected to an antenna member (not illustrated) (e.g., coil). An antenna member (not illustrated) may include a multi-function coil (MFC) or multi-function core antenna for performing wireless charging function, near field communication (NFC) function, and/or electronic payment function. For example, the battery 289 may receive power from an external electronic device 101 using an antenna member (not illustrated) for wireless charging. According to an embodiment, the battery 289 may transmit power to an external electronic device 101 using an antenna member (not illustrated) for wireless charging.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally disposed within the electronic device 101 or may be disposed detachably from the electronic device 101. According to an embodiment, the battery 289 may be formed of a single embedded battery or may include a plurality of removable batteries. According to an embodiment, the battery 289 may be located in the first cover member 211. For example, the battery 289 may be surrounded by the battery cover 289a. According to an embodiment, it is located within the first housing 201 and may slide together with the first housing 201.

According to an embodiment, in the slide-in state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 230 may be minimized. For example, if the second housing 202 is completely received in the first housing 201, the first display area A1 of the display 230 may be visually exposed, and at least a portion (e.g., a portion along the -Z axis) of the second display area A2 may be disposed between the battery 289 and the first rear plate 213.

According to an embodiment, in the slide-out state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 230, together with the first display area A1, may be visually exposed to the outside of the electronic device 101.

According to an embodiment, an electronic device may further include a linear motion (LM) guide structure 290. According to an embodiment, the linear motion (LM) guide structure 290 may be a structure that guides sliding movement of the drive structure 240. The linear motion (LM) guide structure 290 may be coupled with the drive structure 240. According to an embodiment, the linear motion (LM) guide structure 290 may be disposed on one side surface facing the left direction (e.g., -X direction) of the electronic device and/or one side surface facing the right direction (e.g., +X direction). The linear motion (LM) guide structure 290 may be disposed in pairs and respectively disposed on one side surface facing the left direction (e.g., -X direction) and one side surface facing the right direction (e.g., +X direction) of the electronic device. Hereinafter, the configuration, structure, and function of the linear motion (LM) guide structure 290 is described below.

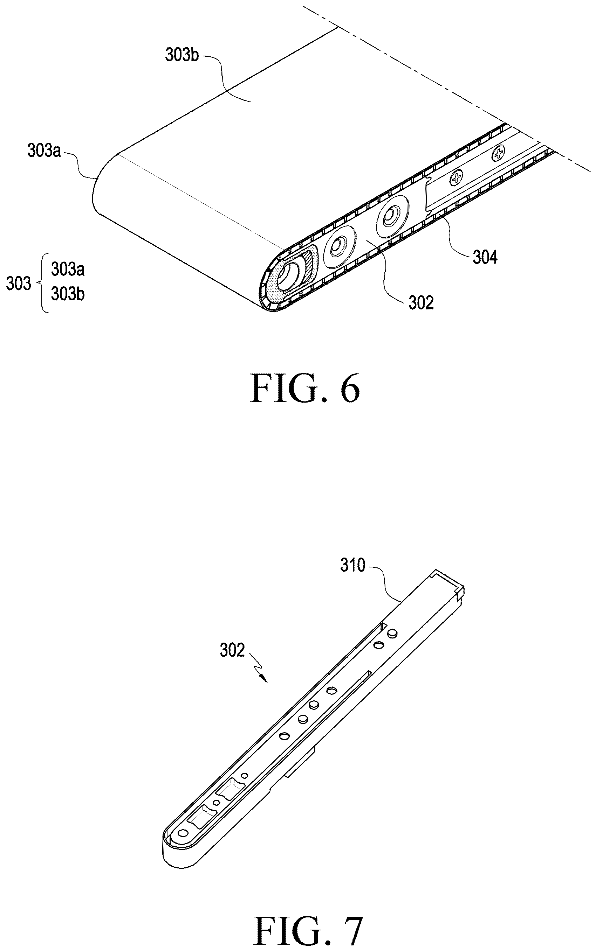

FIG. 5 is a view illustrating internal components of the electronic device 101 according to an embodiment of the disclosure. FIG. 6 is a view illustrating a display 303 and a configuration supporting the display 303 according to an embodiment of the disclosure.

Referring to FIGS. 5 and 6, the electronic device 101 may include a housing 301, a flexible display 303, a plurality of bars 304, and a linear motion (LM) guide structure 302. Referring to FIGS. 5 and 6, the configuration of the housing 301, the flexible display 303, and the linear motion (LM) guide structure 302 may be identical in whole or part to the configuration of the first housing 201, the second housing 202 configured to slide relative to the first housing, the flexible display 203, and the linear motion (LM) guide structure 290 of FIGS. 2 to 4. The structures of FIGS. 5 and 6 may be selectively combinable with the structures of FIGS. 2 to 4.

According to an embodiment, the flexible display 303 includes a first display area (e.g., the first display area A1 of FIG. 3) and a second display area (e.g., the second display area A2 of FIG. 3) extending from the first display area, and may be configured such that the second display area rolls in or rolls out in a first direction (e.g., the first direction ① of FIG. 3) based on a sliding movement of the second housing (e.g., the second housing 202 of FIG. 3). According to an embodiment, the flexible display 303 may include a planar portion 303b and a curved portion 303a extending from the planar portion 303b.

According to an embodiment, when the electronic device 101 changes from the slide-out state to the slide-in state (e.g., when the second housing 202 slides to contract relative to the first housing 201), a force acts in a downward direction (-Y-axis direction) on the curved portion 303a of the flexible display 303 (e.g., a portion where the curved portion of the display begins), and stress concentration may occur at two opposite ends of the curved portion 303a of the flexible display 303. When stress concentration occurs at two opposite ends of the curved portion 303a of the flexible display 303, the display 303 in the downward direction may deform, and at least a portion of the drive structure may deform due to stress.

According to an embodiment, when the electronic device 101 changes from the slide-out state to the slide-in state (e.g., the second housing 202 slides to contract relative to the first housing 201) and the second housing 202 moves in the downward direction, at least a portion of the display 303 may sag in the downward direction due to the force moving in the downward direction. For example, at least a portion of the display 303 may sag about 1.1mm in the downward direction due to the force of the second housing 202 moving in the downward direction.

According to an embodiment, when the electronic device 101 falls or receives an external impact, stress concentration occurs at two opposite ends of the curved portion 303a of the flexible display 303, and at least a portion of the display 303 may deform due to external force.

According to an embodiment of the disclosure, when an electronic device falls in various directions including the downward direction or receives an impact, the occurrence of stress concentration at two opposite ends of the curved portion 303a of the display 303 may be decreased, thereby reducing deformation of the display 303.

According to an embodiment, the plurality of bars 304 may be disposed below the second display area. According to an embodiment, the linear motion guide structure 302 is disposed at the side and/or below the plurality of bars 304 and may support the sliding movement of the second housing 202 relative to the first housing 201 on the side of the electronic device 101.

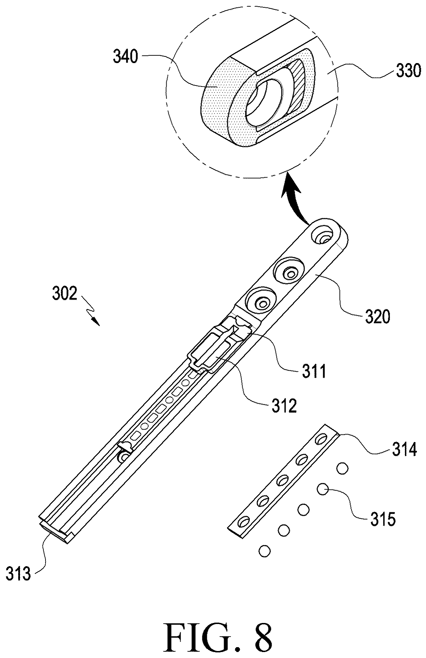

FIG. 7 is a view illustrating a rear surface of a linear motion (LM) guide structure according to an embodiment of the disclosure. FIG. 8 is a view illustrating a front surface of a linear motion (LM) guide structure according to an embodiment of the disclosure.

Referring to FIGS. 7 and 8, the linear motion (LM) guide structure may include a block 320, a linear rail 310, and a plurality of balls 315. Referring to FIGS. 7 and 8, the configuration of the linear motion (LM) guide structure 302 may be identical in whole or part to the configuration of the linear motion (LM) guide structure 302 of FIGS. 5 and 6. The structures of FIGS. 7 and 8 may be selectively combinable with the structures of FIGS. 5 and 6.

According to an embodiment, the linear motion guide structure 302 may be a configuration for supporting sliding movement of the second housing 202 relative to the first housing 201 on the side of the electronic device 101.

According to an embodiment, the block 320 may be configured to move in the first direction corresponding to sliding movement of the housing. According to an embodiment, the block 320 may be disposed adjacent to the curved portion 303a of the display 303. At least a portion of the block 320 may include substantially the same curved surface as the curved surface of the curved portion 303a. According to an embodiment, the linear rail 310 may be disposed on the side of the electronic device. According to an embodiment, the linear rail 310 may guide movement of the block 320.

According to an embodiment, the plurality of balls 315 may be disposed between the block 320 and the linear rail 310. The plurality of balls 315 may reduce friction force generated against the linear rail 310 when the block 320 moves.

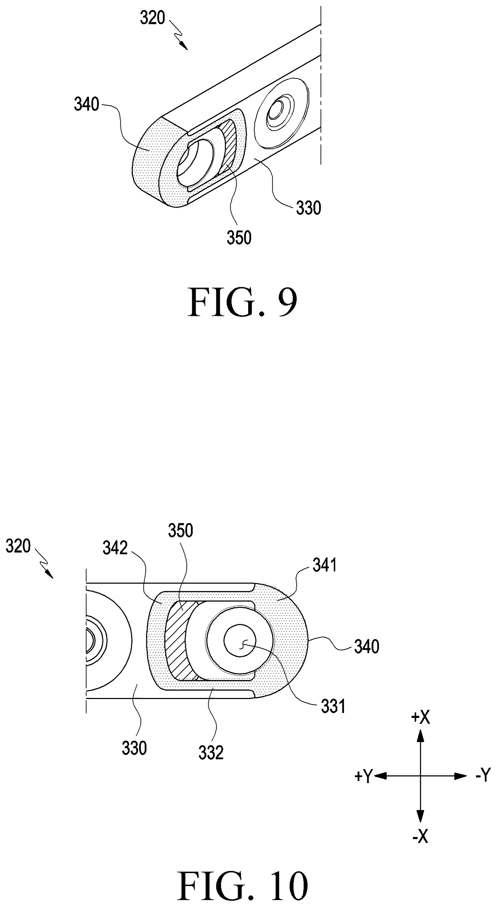

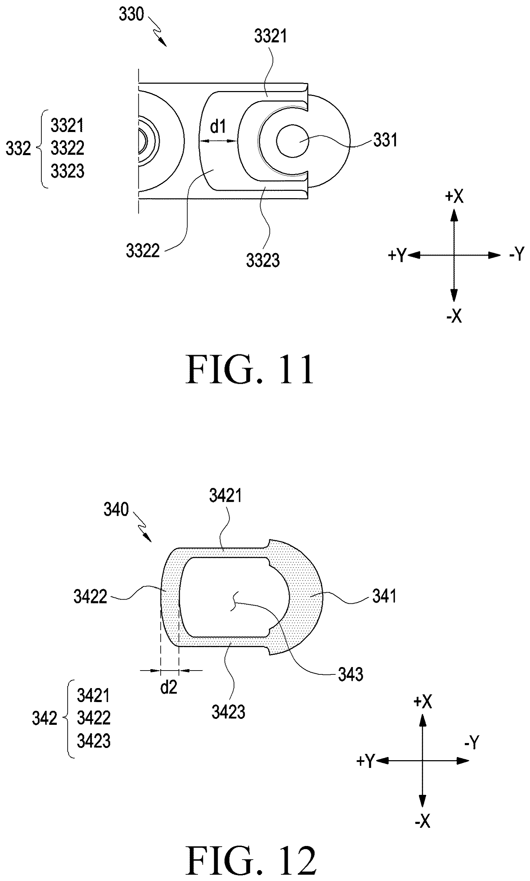

FIG. 9 is a perspective view illustrating a block 320 of a linear motion guide structure 302 according to an embodiment of the disclosure. FIG. 10 is a front view illustrating a block 320 of a linear motion guide structure 302 according to an embodiment of the disclosure. FIG. 11 is a front view illustrating a first block 330 of a linear motion guide structure 302 according to an embodiment of the disclosure. FIG. 12 is a front view illustrating a second block 340 of a linear motion guide structure 302 according to an embodiment of the disclosure.

Referring to FIGS. 9 to 12, the electronic device 101 may include a housing 301, a flexible display 303, a plurality of bars 304, and a linear motion (LM) guide structure 302. Referring to FIGS. 9 to 12, the configuration of the housing, the flexible display 303, and the linear motion (LM) guide structure 302 may be identical in whole or part to the configuration of the first housing 201, the second housing 202 configured to slide relative to the first housing, the flexible display 203, and the LM (linear motion, LM) guide structure 302 of FIGS. 7 and 8. The structures of FIGS. 9 to 12 may be selectively combinable with the structures of FIGS. 7 and 8.

According to an embodiment, the block 320 may include a first block 330, a second block 340 configured to couple with the first block 330, and an elastic member 350 disposed between the first block 330 and the second block 340.

According to an embodiment, the first block 330 may include at least one first opening 331 for sliding movement and fixation of the second housing (e.g., 202 of FIG. 3).

According to an embodiment, the first block 330 may include a guide portion 332 recessed in the thickness direction (-Z-axis direction) and capable of being stacked with the second block 340. The guide portion 332 may be formed at a position corresponding to the first opening 331 disposed in the lowermost direction among the plurality of first openings 331 of the first block 330. According to an embodiment, the guide portion 332 may include a first guide portion 3321 extending in a first direction (Y-axis direction), a second guide portion 3322 extending from the first guide portion 3321 in a second direction (X-axis direction) substantially perpendicular to the first direction, and a third guide portion 3323 extending from the second guide portion 3322 in a direction substantially perpendicular to the second direction and disposed parallel to the first guide portion 3321. According to an embodiment, the first guide portion 3321, the second guide portion 3322, and the third guide portion 3323 may be disposed to surround the first opening 331. According to an embodiment, the first guide portion 3321 and the third guide portion 3323 may be disposed substantially symmetrically in the X-axis direction based on the first opening 331. For example, the first guide portion 3321 and the third guide portion 3323 may be formed to be 0.5mm or more to prevent or reduce bending upon external impact. For example, the second guide portion 3322 may have a first length d1 in the width direction (Y-axis direction).

According to an embodiment, the second block 340 may be coupled with the first block 330 and may be slidably movable in the first direction along the guide portion 332 of the first block 330. According to an embodiment, the second block 340 may include a body portion 341 disposed in parallel with the first block 330 in the downward direction of the first block 330, and a catching portion 342 extending from the body portion 341 and configured to control the sliding movement.

According to an embodiment, at least a portion of the body portion 341 may be curved. A surface of the body portion 341 facing the downward direction (-Y-axis direction) may include a curved surface corresponding to the curved portion 303a of the display 303.

According to an embodiment, the catching portion 342 may extend from two opposite ends of a surface of the body portion 341 facing the upward direction (+Y-axis direction). According to an embodiment, the catching portion 342 may be disposed on the guide portion 332 of the first block 330. The height and/or thickness of the body portion 341 and the catching portion 342 may be different. The thickness of the body portion 341 may be thicker than the thickness of the catching portion 342. The rear surface (surface facing the -Z-axis direction) of the body portion 341 may be positioned lower than the rear surface of the catching portion 342. According to an embodiment, the catching portion 342 may include a first catching portion 3421 extending from the body portion 341 in the first direction (Y-axis direction), a second catching portion 3422 extending from the first catching portion 3421 in a second direction (X-axis direction) substantially perpendicular to the first direction, and a third catching portion 3423 extending from the second catching portion 3422 in a direction substantially perpendicular to the second direction and disposed parallel to the first catching portion 3421. According to an embodiment, a second opening 343 may be formed from the first catching portion 3421, the second catching portion 3422, the third catching portion 3423, and the body portion 341. According to an embodiment, the first guide portion 3321 and the first catching portion 3421 may be formed with substantially the same shape and/or size. The first catching portion 3421 may be seated on the first guide portion 3321. According to an embodiment, the third guide portion 3323 and the third catching portion 3423 may be formed with substantially the same shape and/or size. The third catching portion 3423 may be seated on the third guide portion 3323. For example, the first catching portion 3421 and the third catching portion 3423 may be formed to be 0.5mm or more to prevent or reduce bending upon external impact.

According to an embodiment, the second guide portion 3322 and the second catching portion 3422 may be formed with substantially the same shape and/or size. The second catching portion 3422 may be seated on the second guide portion 3322. For example, a length in the width direction (Y-axis direction) of the second catching portion 3422 may be a second length d2 shorter than the first length d1.

According to an embodiment, the elastic member 350 may return the second block 340 that has slid in the downward direction to its original position by the compressive repulsion force of the elastic body.

According to an embodiment, the elastic member 350 may be disposed on the second guide portion 3322 of the first block 330. According to an embodiment, the elastic member 350 may be disposed in parallel with the second catching portion 3422 of the second block 340. The elastic member 350 and the second catching portion 3422 of the second block 340 may be disposed on the second guide portion 3322 of the first block 330. According to an embodiment, the elastic member 350 may be disposed in the downward direction of the second catching portion 3422. According to an embodiment, the elastic member 350 may be, e.g., any one of rubber, sponge, spring, or polymer elastomer. For example, a length in the width direction (Y-axis direction) of the elastic member 350 may be a third length d3 shorter than the first length d1. For example, the first length may be substantially equal to or greater than the sum of the second length d2 and the third length d3. For example, the third length d3 may be about 0.7mm or more and 1.5mm or less. For example, the third length d3 may be about 1.0mm. For example, a compression force of the elastic member 350 due to flow or vibration of the electronic device 101 may be about 30%. For example, a maximum compression force of the elastic member 350 upon bottom impact of the electronic device 101 may be about 60%. For example, when the third length d3 is 1.0mm, at maximum compression, the third length d3 may be compressed to a fifth length d5 of 0.5mm. According to an embodiment, the elastic member 350 may have a bar or rectangular shape. According to an embodiment, the elastic member 350 may have a ring shape.

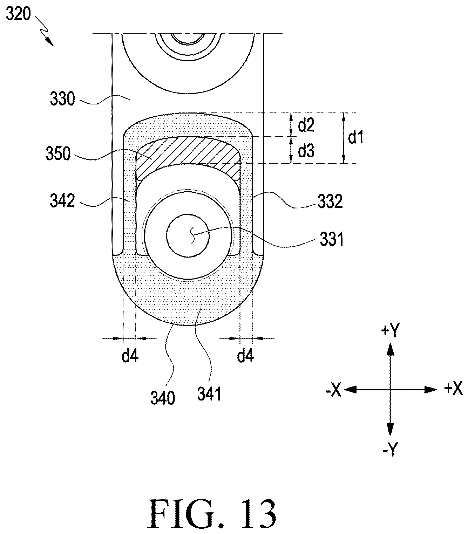

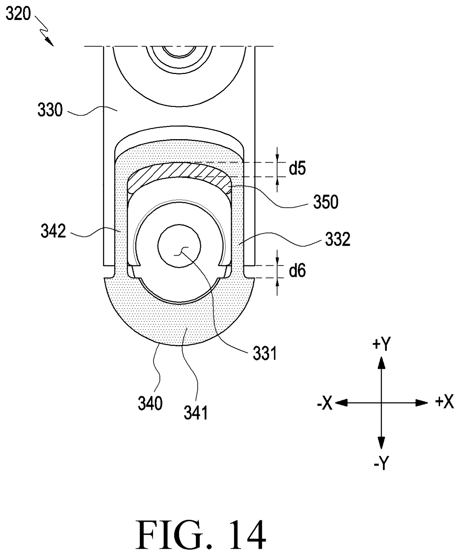

FIG. 13 is a view illustrating a first state of a block 320 according to an embodiment of the disclosure. FIG. 14 is a view illustrating a second state of a block 320 according to an embodiment of the disclosure.

Referring to FIGS. 13 and 14, the electronic device 101 may include a housing 301, a flexible display 303, a plurality of bars 304, and a linear motion (LM) guide structure 302. Referring to FIGS. 13 and 14, the configuration of the housing and the flexible display 303 may be identical in whole or part to the configuration of the first housing 201, the second housing 202 configured to slide relative to the first housing, and the flexible display 203 of FIGS. 9 to 14. The structures of FIGS. 13 and 14 may be selectively combinable with the structures of FIGS. 9 to 14.

According to an embodiment, a state in which an upper surface (surface facing the +Y-axis direction) of the second catching portion 3422 of the second block 340 contacts an upper side surface of the second guide portion 332 of the first block 330 may be defined as a first state. In the first state, a surface of the first block 330 facing the downward direction and a surface of the body portion 341 of the second block 340 facing the upward direction may contact each other.

According to an embodiment, the second block 340 may slide in the downward direction by an external force applied in the downward direction. According to an embodiment, a state in which the second block 340 slides in the downward direction such that the upper surface (surface facing the +Y-axis direction) of the second catching portion 3422 is separated from the upper side surface of the second guide portion 332 of the first block 330 may be defined as a second state. In the second state, a surface of the first block 330 facing the downward direction and a surface of the body portion 341 of the second block 340 facing the upward direction may also be spaced apart by a designated sixth distance (gap) d6. For example, the sixth distance d6 may be about 0.1mm or more and 0.5mm or less.

According to an embodiment, by configuring to couple the second block 340 that is slidably movable in the first direction and the first block 330 that guides movement of the second block 340, two opposite ends of the curved portion 303a of the display 303 may extend in the downward direction, thereby reducing stress received by the display 303. For example, when falling in the downward direction, a sagging amount of the display 303 in the downward direction is about 1.1mm, and as two opposite ends of the display 303 extend by about 0.5mm, a difference in sagging amount applied to the display 303 is about 0.6mm, which may be decreased by about 45% or more compared to the existing amount (e.g., 1.1mm).

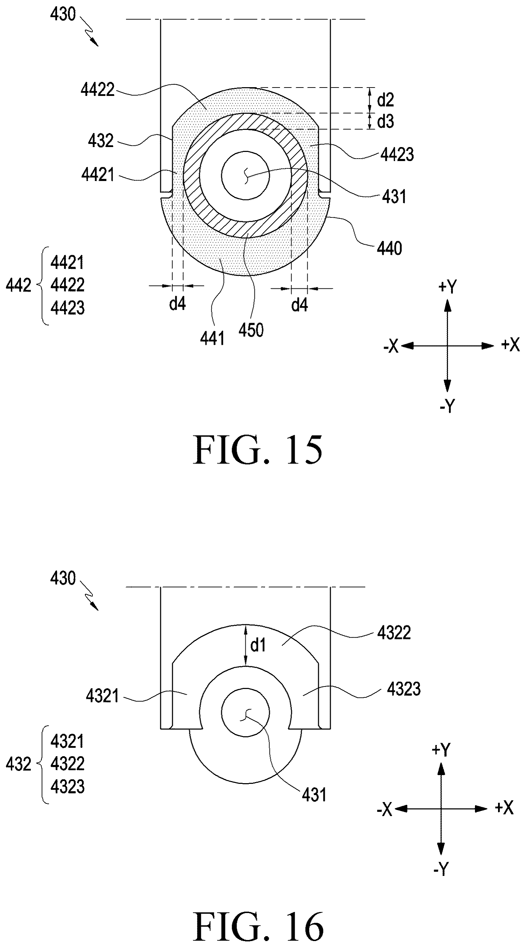

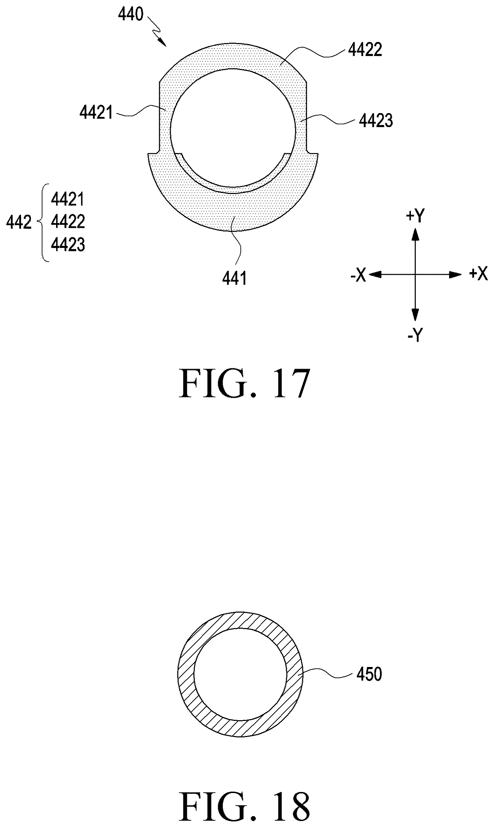

FIG. 15 is a view illustrating a block according to an embodiment of the disclosure. FIG. 16 is a front view illustrating a first block of a linear motion guide structure according to an embodiment of the disclosure. FIG. 17 is a front view illustrating a second block of a linear motion guide structure according to an embodiment of the disclosure. FIG. 18 is a front view illustrating an elastic member of a linear motion guide structure according to an embodiment of the disclosure.

Referring to FIGS. 15 to 18, the electronic device 101 may include a housing 301, a flexible display 303, a plurality of bars 304, and a linear motion (LM) guide structure 302. Referring to FIGS. 15 to 18, the configuration of the housing, the flexible display 303, and the linear motion (LM) guide structure 302 may be identical in whole or part to the configuration of the first housing 201, the second housing 202 configured to slide relative to the first housing, the flexible display 203, and the LM (linear motion, LM) guide structure 302 of FIGS. 9 to 12. The structures of FIGS. 15 to 18 may be selectively combinable with the structures of FIGS. 9 to 12.

According to an embodiment, the block 420 may include a first block 430, a second block 440 configured to couple with the first block 430, and an elastic member 450 disposed between the first block 430 and the second block 440.

According to an embodiment, the first block 430 may include at least one first opening 431 for sliding movement and fixation of the second housing (e.g., 202 of FIG. 3).

According to an embodiment, the first block 430 may include a guide portion 432 recessed in the thickness direction (-Z-axis direction) and capable of being stacked with the second block 440. The guide portion 432 may be formed at a position corresponding to the first opening 431 disposed in the lowermost direction among the plurality of first openings 431 of the first block 430. According to an embodiment, the guide portion 432 may include a first guide portion 4321 extending in a first direction (Y-axis direction), a second guide portion 4322 extending from the first guide portion 4321 in a second direction (X-axis direction) substantially perpendicular to the first direction, and a third guide portion 4323 extending from the second guide portion 4322 in a direction substantially perpendicular to the second direction and disposed parallel to the first guide portion 4321. According to an embodiment, inner surfaces of the first guide portion 4321, the second guide portion 4322, and the third guide portion 4323 may be substantially curved. According to an embodiment, the inner surfaces of the first guide portion 4321, the second guide portion 4322, and the third guide portion 4323 may substantially constitute at least a portion of a circle.

According to an embodiment, the first guide portion 4321, the second guide portion 4322, and the third guide portion 4323 may be disposed to surround the first opening 431. According to an embodiment, the first guide portion 4321 and the third guide portion 4323 may be disposed substantially symmetrically in the X-axis direction based on the first opening 431. For example, the first guide portion 4321 and the third guide portion 4323 may be formed to be 0.4mm or more to prevent or reduce bending upon external impact. For example, the second guide portion 4322 may have a first length d1 in the width direction (Y-axis direction).

According to an embodiment, the second block 440 may be coupled with the first block 430 and may be slidably movable in the first direction (Y-axis direction) along the guide portion 432 of the first block 430. According to an embodiment, the second block 440 may include a body portion 441 disposed in parallel with the first block 430 in the downward direction of the first block 430, and a catching portion 442 extending from the body portion 441 and configured to control the sliding movement.

According to an embodiment, at least a portion of the body portion 441 may be curved. A surface of the body portion 441 facing the downward direction (-Y-axis direction) may include a curved surface corresponding to the curved portion 303a of the display 303.

According to an embodiment, the catching portion 442 may extend from two opposite ends of a surface of the body portion 441 facing the upward direction (+Y-axis direction). According to an embodiment, the catching portion 442 may be disposed on the guide portion 432 of the first block 430. The height and/or thickness of the body portion 441 and the catching portion 442 may be different. The thickness of the body portion 441 may be thicker than the thickness of the catching portion 442. The rear surface (surface facing the -Z-axis direction) of the body portion 441 may be positioned lower than the rear surface of the catching portion 442. According to an embodiment, the catching portion 442 may include a first catching portion 4421 extending from the body portion 441 in the first direction (Y-axis direction), a second catching portion 4422 extending from the first catching portion 4421 in a second direction (X-axis direction) substantially perpendicular to the first direction, and a third catching portion 4423 extending from the second catching portion 4422 in a direction substantially perpendicular to the second direction and disposed parallel to the first catching portion 4421. According to an embodiment, a second opening may be formed from the first catching portion 4421, the second catching portion 4422, the third catching portion 4423, and the body portion 441. According to an embodiment, the first guide portion 4321 and the first catching portion 4421 may be formed with substantially the same shape and/or size. The first catching portion 4421 may be seated on the first guide portion 4321. According to an embodiment, the third guide portion 4323 and the third catching portion 4423 may be formed with substantially the same shape and/or size. The third catching portion 4423 may be seated on the third guide portion 4323. For example, the first catching portion 4421 and the third catching portion 4423 may be formed to be 0.5mm or more to prevent or reduce bending upon external impact.

According to an embodiment, the second guide portion 4322 and the second catching portion 4422 may be formed with substantially the same shape and/or size. The second catching portion 4422 may be seated on the second guide portion 4322. For example, a length in the width direction (Y-axis direction) of the second catching portion 4422 may be a second length d2 shorter than the first length d1.

According to an embodiment, the elastic member 450 may return the second block 440 that has slid in the downward direction to its original position by the compressive repulsion force of the elastic body.

It may be disposed on the second guide portion 4322 of the first block 430. According to an embodiment, the elastic member 450 may be disposed alongside inside the second catching portion 4422 of the second block 440. The elastic member 450 and the second catching portion 4422 of the second block 440 may be disposed on the second guide portion 4322 of the first block 430. According to an embodiment, the elastic member 450 may be disposed in an inner direction of the second catching portion 4422. For example, the elastic member 450 may be located within the second opening of the second catching portion 4422. According to an embodiment, the elastic member 450 may be, e.g., any one of rubber, sponge, spring, or polymer elastomer. For example, a length in the width direction (Y-axis direction) of the elastic member 450 may be a third length d3 shorter than the first length d1. For example, the first length may be substantially equal to or greater than the sum of the second length and the third length. For example, the third length d3 may be about 0.4mm or more and 1.0mm or less. For example, the third length d3 may be about 0.6mm. For example, a compression force of the elastic member 450 due to flow or vibration of the electronic device 101 may be about 30%. For example, a maximum compression force of the elastic member 450 upon bottom impact of the electronic device 101 may be about 67%. For example, when the third length d3 is 0.6mm, at maximum compression, the third length may be compressed to 0.2mm.

According to an embodiment, the elastic member 450 may have a ring shape. By using a ring-shaped elastic member 450, elastic compressive repulsion force may occur even under impacts applied in various directions besides the downward direction, thereby stably protecting the display.

According to an embodiment, a state in which an upper surface (surface facing the +Y-axis direction) of the second catching portion 4422 of the second block 440 contacts an upper side surface of the second guide portion 432 of the first block 430 may be defined as a first state. In the first state, a surface of the first block 430 facing the downward direction and a surface of the body portion 441 of the second block 440 facing the upward direction may contact each other.

According to an embodiment, the second block 440 may slide in the downward direction by an external force applied in the downward direction. According to an embodiment, a state in which the second block 440 slides in the downward direction such that the upper surface (surface facing the +Y-axis direction) of the second catching portion 4422 is separated from the upper side surface of the second guide portion 432 of the first block 430 may be defined as a second state. In the second state, a surface of the first block 430 facing the downward direction and a surface of the body portion 441 of the second block 440 facing the upward direction may also be spaced apart by a designated distance (gap). For example, the designated distance (gap) may be about 0.1mm or more and 0.5mm or less.

According to an embodiment, by configuring to couple the second block 440 that is slidably movable in the first direction and the first block 430 that guides movement of the second block 440, two opposite ends of the curved portion 303a of the display 303 may extend in the downward direction, thereby reducing stress received by the display 303. For example, when falling in the downward direction, a sagging amount of the display 303 in the downward direction is about 1.1mm, and as two opposite ends of the display 303 extend by about 0.5mm, a difference in sagging amount applied to the display 303 is about 0.6mm, which may be decreased by about 45% or more compared to the existing amount (e.g., 1.1mm).

According to an embodiment of the disclosure, an electronic device includes a first housing, a second housing configured to slide relative to the first housing, a flexible display comprising a first display area and a second display area extending from the first display area and configured such that the second display area rolls in or rolls out in a first direction based on a sliding movement of the second housing, a plurality of bars disposed below the second display area, a drive structure configured to provide a driving force for the sliding movement of the second housing relative to the first housing on a side of the electronic device, and a linear motion (LM) guide structure disposed below the plurality of bars and configured to support the sliding movement of the second housing relative to the first housing on the side of the electronic device. The linear motion (LM) guide structure may include: a block configured to move in the first direction and disposed adjacent to a curved portion 303a of the second display area, the block comprising a first block and a second block configured to couple with the first block; a linear rail guiding movement of the block; and a plurality of balls disposed between the block and the rail. The first block may include a guide portion guiding movement of the second block. The second block may be configured to be slidably movable in the first direction along the guide portion.

According to an embodiment, the guide portion may be recessed in a thickness direction and configured such that the second block is stacked on the guide portion.

According to an embodiment, the guide portion may include a first guide portion 3321 extending in the first direction, a second guide portion 3322 extending from the first guide portion in a second direction perpendicular to the first direction, and a third guide portion 3323 extending from the second guide portion in the first direction and disposed parallel to the first guide portion.

According to an embodiment, the first block may include at least one first opening 331 for the sliding movement or fixation of the second housing.

According to an embodiment, the first guide portion, the second guide portion, and the third guide portion may be disposed to surround the first opening.

According to an embodiment, the second block may include a body portion 341 disposed in parallel with the first block, and a catching portion 342 extending from one surface of the body portion and disposed on the guide portion of the first block.

According to an embodiment, a surface of the body portion facing a downward direction may include a curved surface corresponding to the curved portion of the display.

According to an embodiment, the catching portion may include a first catching portion 3421 extending from the body portion in the first direction and disposed on the first guide portion, a second catching portion 3422 extending from the first catching portion in a second direction perpendicular to the first direction and disposed on the second guide portion, and a third catching portion 3423 extending from the second catching portion in the first direction, disposed on the third guide portion, and connected to the body portion.

According to an embodiment, a first length d1 of the second guide portion in a width direction (Y-axis direction) may be longer than a second length d2 of the second catching portion in the width direction (Y-axis direction).

According to an embodiment, the electronic device may further include an elastic member 350 disposed on the second guide portion of the first block and disposed in a downward direction of the second catching portion of the second block.

According to an embodiment, the elastic member may be any one of rubber, sponge, spring, or polymer elastomer.

According to an embodiment, a first length d1 of the second guide portion in a width direction (Y-axis direction) may be longer than a third length d3 of the elastic member in the width direction (Y-axis direction).

According to an embodiment, the elastic member may have a bar shape.

According to an embodiment, the elastic member may have a ring shape.

According to an embodiment, in a state where the second block slides in a downward direction such that an upper surface (e.g., a surface facing the +Y-axis direction) of the second catching portion is separated from an upper side surface of the second guide portion of the first block, a surface of the first block facing a downward direction and a surface of the body portion of the second block facing an upward direction may be configured to be spaced apart from each other.

According to an embodiment of the disclosure, an electronic device includes a first housing, a second housing configured to slide relative to the first housing, a flexible display comprising a first display area A1 and a second display area A2 extending from the first display area and configured such that the second display area varies based on a sliding movement of the second housing, a plurality of bars disposed below the second display area, a drive structure configured to provide a driving force for the sliding movement of the second housing relative to the first housing on a side of the electronic device, and a linear motion (LM) guide structure disposed below the plurality of bars and configured to support the sliding movement of the second housing relative to the first housing on the side of the electronic device. The linear motion (LM) guide structure may include: a block configured to move in the first direction, the block comprising a first block disposed adjacent to a curved portion of the second display area, a second block configured to couple with the first block, and an elastic member disposed between the first block and the second block; a linear rail guiding movement of the block; and a plurality of balls disposed between the block and the rail. The first block may include a guide portion guiding movement of the second block. The second block may be configured to be slidably movable in the first direction along the guide portion.

According to an embodiment, the guide portion may include a first guide portion extending in the first direction, a second guide portion extending from the first guide portion in a second direction perpendicular to the first direction, and a third guide portion extending from the second guide portion in the first direction and disposed parallel to the first guide portion.

According to an embodiment, the second block may include a body portion 341 disposed in parallel with the first block, and a catching portion 342 extending from one surface of the body portion and disposed on the guide portion of the first block.

According to an embodiment, the catching portion may include a first catching portion extending from the body portion in the first direction and disposed on the first guide portion, a second catching portion extending from the first catching portion in a second direction perpendicular to the first direction and disposed on the second guide portion, and a third catching portion extending from the second catching portion in the first direction, disposed on the third guide portion, and connected to the body portion.

According to an embodiment, a first length d1 of the second guide portion in a width direction (Y-axis direction) may be longer than a sum of a second length d2 of the second catching portion in the width direction (Y-axis direction) and a third length d3 of the elastic member in the width direction (Y-axis direction).

An electronic device (e.g., portable terminal) may include a display having a flat surface or a form having both flat and curved surfaces. An electronic device including a display may have limitations in implementing a screen larger than the size of the electronic device due to the structure of the fixed display 303. Therefore, an electronic device including a rollable display is being researched.

An electronic device with a rollable display may have its partial area extended or shrunken when slid.

When an electronic device changes from a slide-out state to a slide-in state, a force acts in a downward direction (-Y-axis direction) on the curved portion 303a of the flexible display 303 (e.g., a portion where the curved portion of the display begins), and stress concentration may occur at two opposite ends of the curved portion 303a of the flexible display 303. When stress concentration occurs at two opposite ends of the curved portion 303a of the flexible display 303, the display 303 in the downward direction may deform, and at least a portion of the drive structure may deform due to stress.

According to an embodiment of the disclosure, when an electronic device falls or receives an external impact, stress concentration occurs at two opposite ends of the curved portion of the display, and at least a portion of the display 303 may deform due to external force.

According to an embodiment of the disclosure, when an electronic device falls in various directions including the downward direction or receives an impact, the occurrence of stress concentration at two opposite ends of the curved portion of the display may be decreased, thereby reducing deformation of the display.

However, the objects of the disclosure are not limited to those mentioned above, and may be variously determined within a range that does not depart from the spirit and scope of the disclosure.

## Claims

1. An electronic device comprising:
a first housing (201);
a second housing (202) configured to slide relative to the first housing;
a flexible display (303) comprising a first display area (A1) and a second display area (A2) extending from the first display area, the flexible display configured such that the second display area varies based on a sliding movement of the second housing;
a plurality of bars (304) disposed below the second display area;
a drive structure configured to provide a driving force for the sliding movement of the second housing relative to the first housing on a side of the electronic device; and
a linear motion (LM) guide structure (302) disposed below the plurality of bars and configured to support the sliding movement of the second housing relative to the first housing on the side of the electronic device,
wherein the linear motion (LM) guide structure includes:
a block comprising a first block (330) configured to move in a first direction and disposed adjacent to a planar portion (303b) of the second display area, and a second block (340) disposed adjacent to a curved portion (303a) extending from the planar portion and configured to couple with the first block,
wherein the first block includes a guide portion (332) configured to guide movement of the second block, and
wherein the second block is configured to be slidably movable in the first direction along the guide portion.

2. The electronic device of claim 1,
wherein the guide portion is recessed in a thickness direction and configured such that the second block is stacked on the guide portion.

3. The electronic device of claim 1 or 2,
wherein the guide portion includes a first guide portion (3321) extending in the first direction, a second guide portion (3322) extending from the first guide portion in a second direction perpendicular to the first direction, and a third guide portion (3323) extending from the second guide portion in the first direction and disposed parallel to the first guide portion.

4. The electronic device of claim 3,
wherein the first block includes at least one first opening (331) for the sliding movement or fixation of the second housing.

5. The electronic device of claim 4,
wherein the first guide portion, the second guide portion, and the third guide portion are disposed to surround the first opening.

6. The electronic device of any one of claims 3 to 5, wherein the second block includes:
a body portion (341) disposed in parallel with the first block; and
a catching portion (342) extending from one surface of the body portion and disposed on the guide portion of the first block.

7. The electronic device of claim 6,
wherein a surface, facing a downward direction, of the body portion includes a curved surface corresponding to the curved portion of the display.

8. The electronic device of claim 6, wherein the catching portion includes:
a first catching portion (3421) extending from the body portion in the first direction and disposed on the first guide portion, a second catching portion (3422) extending from the first catching portion in a second direction perpendicular to the first direction and disposed on the second guide portion, and a third catching portion (3423) extending from the second catching portion in the first direction, disposed on the third guide portion, and connected to the body portion.

9. The electronic device of claim 8,
wherein a first length (d1) of the second guide portion in a width direction (Y-axis direction) is longer than a second length (d2) of the second catching portion in the width direction (Y-axis direction).

10. The electronic device of any one of claims 3 to 9, further comprising:
an elastic member (350) disposed on the second guide portion of the first block and disposed in a downward direction of the second catching portion of the second block.

11. The electronic device of claim 10,
wherein the elastic member is any one of rubber, sponge, spring, and polymer elastomer.

12. The electronic device of claim 10 or 11,
wherein a first length (d1) of the second guide portion in a width direction (Y-axis direction) is longer than a third length (d3) of the elastic member in the width direction (Y-axis direction).

13. The electronic device of any one of claims 1 to 12,
wherein the linear motion (LM) guide structure includes: a linear rail configured to guide movement of the block; and a plurality of balls disposed between the block and the rail.

14. The electronic device of any one of claims 10 to 12,
wherein the elastic member (450) has a ring shape.

15. The electronic device of any one of claims 1 to 14, wherein in a state where the second block slides in a downward direction such that an upper surface (e.g., a surface facing a +Y-axis direction) of the second catching portion is separated from an upper side surface of the second guide portion of the first block, a surface, facing a downward direction, of the first block and a surface, facing an upward direction, of the body portion of the second block are configured to be spaced apart from each other.
